# EUROPÄISCHE PATENTSCHRIFT

(11) **EP 1 230 063 B1**
(45) Veröffentlichungstag und Bekanntmachung des Hinweises auf die Patenterteilung: **12.07.2006**
(21) Anmeldenummer: 00988618.5
(22) Anmeldetag: 16.11.2000
(51) Int. Cl.: B23K 20/12

(54) **VORRICHTUNG ZUM VERBINDEN VON WERKSTÜCKEN NACH DER METHODE DES REIBRUHRSCHWEISSENS**
DEVICE FOR JOINING WORKPIECES USING THE FRICTION STIR WELDING METHOD
DISPOSITIF SERVANT A RELIER DES PIECES A USINER SELON LES PROCEDES DE SOUDURE PAR FRICTION ET AGITATION

(30) Priorität: 18.11.1999 DE 19957136
(43) Veröffentlichungstag der Anmeldung: 14.08.2002
(73) Patentinhaber: GKSS-Forschungszentrum Geesthacht GmbH, 21502 Geesthacht (DE)
(72) Erfinder: VON STROMBECK, Alexander, 21039 Hamburg (DE); dos Santos, Jorge, Dr., 21335 Lüneberg (DE)
(74) Vertreter: UEXKÜLL & STOLBERG
(86) Internationale Anmeldenummer: PCT/DE2000/004033
(87) Internationale Veröffentlichungsnummer: WO 2001/036143

(56) Entgegenhaltungen:
- EP-A- 0 810 055
- US-A- 5 697 544
- US-A- 5 713 507
- US-A- 5 893 507

## Beschreibung

Die Erfindung betrifft eine Vorrichtung zum Verbinden von Werkstücken nach der Methode des Reibrührschweißens, wobei die Werkstücke dabei einen Verbindungsbereich zwischen sich einschließen, umfassend eine rotierend antreibbare Achse, an deren antriebsabgewandten Ende ein stiftartiger Vorsprung ausgebildet ist, der bei seiner Rotation in Kontakt mit dem Verbindungsbereich der Werkstücke diese w7enigstens im Kontaktbereich plastifiziert, wobei am antriebsabgewandten Ende des stiftartigen Vorsprungs ein eine zweite Schulter bildender Anschlag mit größerem Durchmesser als dem des Stiftes angeordnet ist, sowie ein eine erste Schulter bildender Anschlag und wobei die Werkstücke zwischen den beiden Anschlägen eingeschlossen werden.

Eine Vorrichtung dieser Art ist bekannt (EP-B-0 615 480). Das Reibrührschweißen, vielfach auch FSW (Friction Stir Welding) genannt, ist vom Grundsatz her seit mehreren Jahren bekannt und ist immer weiterentwickelt worden. Ursprünglich wurde das Reibschweißen derart ausgeführt, daß zwei Werkstücke, die miteinander durch Reibschweißung verbunden werden sollen, gegeneinander im gewünschten Verbindungsbereich bewegt werden und dabei mit einer voreinstellbaren Kraft gegeneinander gedrückt werden. Durch die durch die Reibung entstehende Wärme erfolgt letztlich eine Plastifizierung des Werkstoffs der Werkstücke in dem Verbindungsbereich. Ist der Werkstoff ausreichend plastifiziert, kann zumindest im oberflächennahen Bereich der Verbindung eine ausreichende Durchmischung der Werkstoffe beider Werkstücke erfolgen, so daß bei Abkühlung die gewünschte Schweißverbindung zwischen beiden Werkstücken ausgebildet wird.

Bei der eingangs genannten, gattungsgemäßen Vorrichtung wird ein stiftartiger Vorsprung, von einem Antrieb bzw. einem Motor in geeignet große Rotation versetzt, an den Stirnbereich zweier zu verbindender, nahezu stoßartig aneinander gelegter Werkstücke angesetzt und der stiftartige Vorsprung wird, geeignet geführt, was beispielsweise mit einer speziellen Führungsvorrichtung oder auch mit einem Roboter geschehen kann, zusätzlich beispielsweise in eine Translationsbewegung längs der Stoßkanten beider zu verbindender Werkstücke versetzt. Ist nach Beginn des Schweißvorgangs durch die infolge der Rotation des stiftartigen Vorsprungs mit dem Werkstoff der Werkstücke der angrenzende Werkstoffbereich erzeugte Reibungswärme mit dem Werkstoff der Werkstoff ausreichend plastifiziert, wird unter Aufrechterhaltung der Rotationsbewegung des stiftartigen Vorsprungs die Translationsbewegung längs der Stoßkante zwischen den beiden Werkstücken ausgeführt, so daß beispielsweise eine Längsnaht ausgebildet wird.

Die Werkstücke werden mittels der bekannten Vorrichtung im Bereich um die Stoßkante bzw. die ausgebildete Schweißnaht über zwei Anschläge mit größerem Durchmesser als der stiftartige Vorsprung zusammengehalten, indem zwischen beiden Anschlägen der stiftartige Vorsprung eingeschlossen ist. Die aufeinanderzu gerichteten Seiten der beiden Anschläge bilden quasi Schultern, die jeweils auf einer Seite der Werkstücke um den Bereich der auszubildenden Schweißnaht die Oberflächen beider zu verbindender Werkstücke rotierend überstreichen. Wird beispielsweise orthogonal zur Oberfläche der beiden zu verbindenden Werkstücke mittels der Vorrichtung Druck ausgeübt, wird entsprechend auf der druckabgewandten Seite der zu verbindenden Werkstücke der Anlagedruck aufgrund der starren Beabstandung beider Schultern beider Anschläge der dortigen Schulter entsprechend vermindert. Aus diesem Grunde muß bei der bekannten Vorrichtung durch gesonderte Druckmittel für ein geeignetes Gegenlager gesorgt werden, was bei tafel- bzw. flächenförmigen Werkstücken wie Blechen und dergleichen noch mit vertretbarem Aufwand möglich ist, bei komplizierten mittels des Reibrührverfahrens hergestellter Schweißverbindungen aufgrund kompliziert geformter Werkstücke regelmäßig nicht möglich ist.

Hinzu kommt, daß in vielen Fertigungsbereichen verwendete Industrieroboter, beispielsweise im Kraftfahrzeugbau oder im Flugzeugbau, vielfältige Funktionen übernehmen, bei denen flächige oder sonstige Gegenlager zur Ausführung der Schweißverbindung nicht nur hinderlich, sondern auch vielfach überhaupt nicht vorgesehen werden können und zudem die Roboter selbst auch die erforderlichen Andruckkräfte nicht oder nur mit sehr großem Aufwand ausbilden können.

Dabei wird angestrebt, den Roboter weitgehend davon zu entlasten, selbst große Kräfte aufbringen zu müssen und diesem einen größeren Funktionsbereich zu ermöglichen und auch die zu verbindenden Werkstücke selbst zu entlasten.

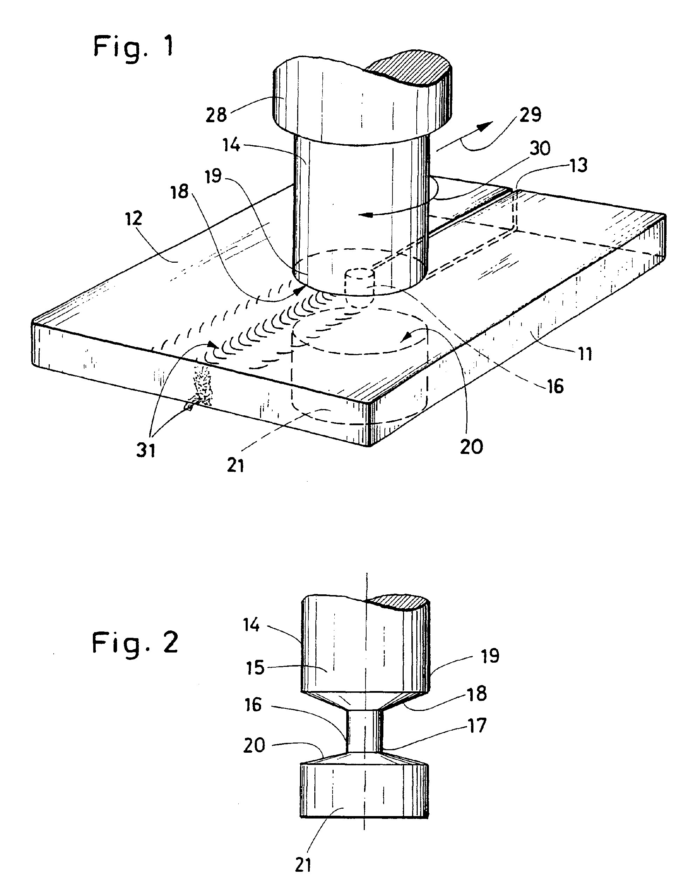

Aus der EP-A-0 810 055 ist eine Vorrichtung zum Reibrührschweißen bekannt, die zwei im Abstand zueinander angeordnete Anschläge mit gegeneinander gerichteten Schultern aufweist, zwischen denen die Werkstücke eingeklemmt und durch Reibrühren verschweißt werden. Dabei ist der Abstand der Anschläge bzw. Schultern und damit die Anpresskraft in diskreten Schritten veränderbar und durch einen Stift fixierbar (siehe Fig.2B).

Aufgabe der Erfindung ist es, eine derartige Vorrichtung dahingehend weiter zu entwickeln, daß damit die Regelung der Anpresskraft besser als beim Stand der Technik möglich ist.

Gelöst wird diese Aufgabe durch eine Vorrichtung, die die Merkmale des Patentanspruchs 1 aufweist.

Vorteilhafte Ausgestaltungen der Erfindung sind Gegenstand der Unteransprüche 2 bis 9.

Der Vorteil der erfindungsgemäßen Lösung besteht im wesentlichen darin, daß die Vorrichtung selbst den notwendigen Druck auf beide Seiten der zu verbindenden Werkstücke aufbringen kann, ohne daß ein Gegenlager erforderlich ist. Somit können auch bei komplizierten Werkstücken Schweißnähte, beispielsweise dreidimensional im Raum verlaufende Schweißnähte, hergestellt werden, ohne daß eine Unterlage erforderlich ist, die bisher die Wurzel der Schweißnaht sichern mußte und gleichzeitig die Werkstücke unterstützen mußte. Erfindungsgemäß kann auch keine Verformung der Werkstücke bei Ausbildung der Schweißnaht oder gar eine Zerstörung erfolgen. Durch den Andruck mittels der Anschläge bzw. der Schultern beider Anschläge an die jeweiligen Seiten der zu verbindenden Werkstücke kann auch während des Schweißvorgangs erzeugter plastifizierter Werkstoff nicht ausdringen. Zusammenfassend kann gesagt werden, daß die Vorrichtung den Vorteil hat, daß sie die Kraft zwischen den ober- und unterhalb der Werkstücke angeordneten Anschlägen selber aufbringt, ohne dabei die Werkstücke selbst zu belasten. Somit können dünnwandige Werkstücke geschweißt werden, die dabei nicht beschädigt werden, d.h. es findet nur eine außerordentlich geringe Belastung der Werkstücke statt. Somit ist beispielsweise auch das Schweißen von Werkstücken in Form von Hohlprofilen möglich, d.h. auch von äußerst kompliziert geformten Teilen, was bisher regelmäßig mit der bisher bekannten Vorrichtung gar nicht möglich war. Erfindungsgemäß wird letztlich auch die Flexibilität des Reibrührschweißens gegenüber dem, was bisher möglich war, außerordentlich erhöht.

Gemäß einer vorteilhaften Ausgestaltung der Erfindung ist ein Gehäuse zur geführten Aufnahme der Achse vorgesehen, wobei die Achse im Gehäuse ein mit dem stiftartigen Vorsprung verbundenes Kolbenelement aufweist, das in einem Zylinderraum im Gehäuse axial hin und her bewegbar ausgebildet ist. Durch geeignete kräftemäßige Beaufschlagung des Kolbenelements kann somit einerseits der Dicke des Werkstücks bzw. der Dicke der zu verbindenden Werkstücke auf einfache Weise Rechnung getragen werden und andererseits auf einfache Weise der Aufbringung der gewünschten Kraft, mit der die Werkstücke bei der Ausbildung der Schweißnaht ergriffen werden können.

Es ist grundsätzlich möglich, die Hin- und Herbewegung des Kolbenelements und damit die Aufbringung des Drucks auf die zwischen den beiden Schultern beider Anschläge eingeschlossenen Werkstücke auf beliebige geeignete Art und Weise aufzubringen, beispielsweise elektromotorisch und/ oder pneumatisch. Es hat sich jedoch als ganz besonders vorteilhaft erwiesen, die Hin- und Herbewegung des Kolbenelements durch das Einbringen von Hydraulikmitteln bewirken zu lassen, zumal Hydraulikmittel auch vielfach für die Grundbewegungsarten von Industrierobotern herangezogen werden, die dann an dem Einsatzort der Vorrichtung schon zur Verfügung stehen würden.

Der Druck, der beiderseits auf den Bereich der auszubildenden Schweißnaht während des Schweißvorgangs auf die Werkstücke ausgeübt wird, kann, wie schon oben angedeutet, an sich auf beliebige Größe eingestellt werden, und zwar in Abhängigkeit der Art der Werkstücke bzw. der Formgebung der Werkstücke und in Abhängigkeit des Werkstoffs der Werkstücke. Die Vorrichtung ist aber vorzugsweise derart ausgebildet, daß sie instande ist, eine Kraft von bis zu 1,5 t, ggf. auch noch darüber hinaus, zwischen den Schultern beider Anschläge auszubilden.

Aufgrund der konstruktiven Ausgestaltung der bekannten, gattungsgemäßen Vorrichtung drehen beide Anschläge und somit beide Schultern, die auf den jeweiligen Seiten der Werkstücke zum Liegen kommen, bei der Rotation der bekannten Vorrichtung mit. Für bestimmte Anwendungsfälle ist es sinnvoll, nur eine der beiden sich ausbildenden Schweißnahtoberflächen mit einem rotierenden Anschlag bzw. mit einer rotierenden Schulter beaufschlagen zu lassen und die andere Seite feststehen zu lassen. Aus diesem Grunde ist es vorteilhaft, die Vorrichtung derart auszugestalten, daß das Gehäuse relativ zur Achse feststeht und dafür beispielsweise den die erste Schulter umfassenden Anschlag mit dem Gehäuse zu verbinden. Die Aufbringung des geeigneten Drucks ist davon unbeeinträchtigt. Das Gehäuse selbst wird dabei durch geeignete Mittel rotationsfrei gehalten und somit auch der mit dem Gehäuse dieser Ausgestaltung der Vorrichtung verbundene Anschlag.

Im Gehäuse ist die Achse dabei vorteilhafterweise in einem darin ausgebildeten Führungselement axial bewegbar, so daß bei der Kolbenbewegung zur Aufbringung des Drucks längs der Achse zur Aufbringung des Anschlagdrucks auf die Werkstücke eine axiale Verschiebung stattfinden kann.

Bei einer anderen vorteilhaften Ausgestaltung der Vorrichtung ist ein Gehäuse zur Aufnahme eines Führungselements vorgesehen, das mit der Achse verbunden ist, wobei im Führungselement ein Zylinderraum vorgesehen ist, in dem ein mit dem stiftartigen Vorsprung verbundenes Kolbenelement axial hin und her bewegbar ausgebildet ist. Wenn dabei vorzugsweise der die erste Schulter bildende Anschlag mit dem Führungselement verbunden ist, rotiert auch der erste Anschlag bzw. dessen Schulter zusammen mit der Rotationsbewegung der Achse und zusammen mit der zweiten Schulter des zweiten Anschlags. Bei dieser Ausgestaltung der Vorrichtung ist somit für eine Rotation der Anschläge und somit der Schultern auf beiden Seiten der zu verbindenden Werkstücke gesorgt.

Da das äußere Gehäuse auch bei dieser Ausgestaltung der Vorrichtung feststeht, muß dafür gesorgt werden, daß auch der stiftartige Vorsprung und der damit verbundene zweite Anschlag bei der Drehbewegung der Achse der Vorrichtung dreht. Dabei ist es grundsätzlich möglich, axial gerichtete Führungen im Zylinderraum vorzusehen, in die entsprechende Führungsaufnahmen des Kolbens eingreifen. Denkbar sind dabei beispielsweise axial gerichtete Nut- und Federführungen. Besonders vorteilhaft ist es aber, die Vorrichtung dafür derart auszugestalten, daß zur Mitbewegung des stiftartigen Vorsprungs und des zweiten Anschlags der Zylinderraum und das darin hin und her bewegliche Kolbenelement einen im wesentlichen elliptischen Querschnitt aufweisen.

Die Erfindung wird nun unter Bezugnahme auf die nachfolgenden schematischen Zeichnungen anhand zweier Ausführungsbeispiele im einzelnen beschrieben. Darin zeigen:
- Fig. 1: in ausschnittweiser perspektivischer Darstellung das grundsätzliche Prinzip des Reibrührschweißens mittels einer Vorrichtung 10, die gattungsbildend für die Vorrichtung 10 gemäß der Erfindung ist,
- Fig. 2: in ausschnittweiser perspektivischer Darstellung einen Ausschnitt des Spitzenbereichs der gattungsgemäßen Vorrichtung 10 zur Darstellung der bisherigen Art der Ausbildung der beiden Anschläge mit jeweiligen Schultern und dem dazwischen angeordneten stiftartigen Vorsprung,
- Fig. 3: in der Seitenansicht im Schnitt eine Vorrichtung gemäß einer ersten Ausführungsform der Erfindung und
- Fig. 4: in der Seitenansicht im Schnitt eine Vorrichtung gemäß einer zweiten Ausführungsform der Erfindung.

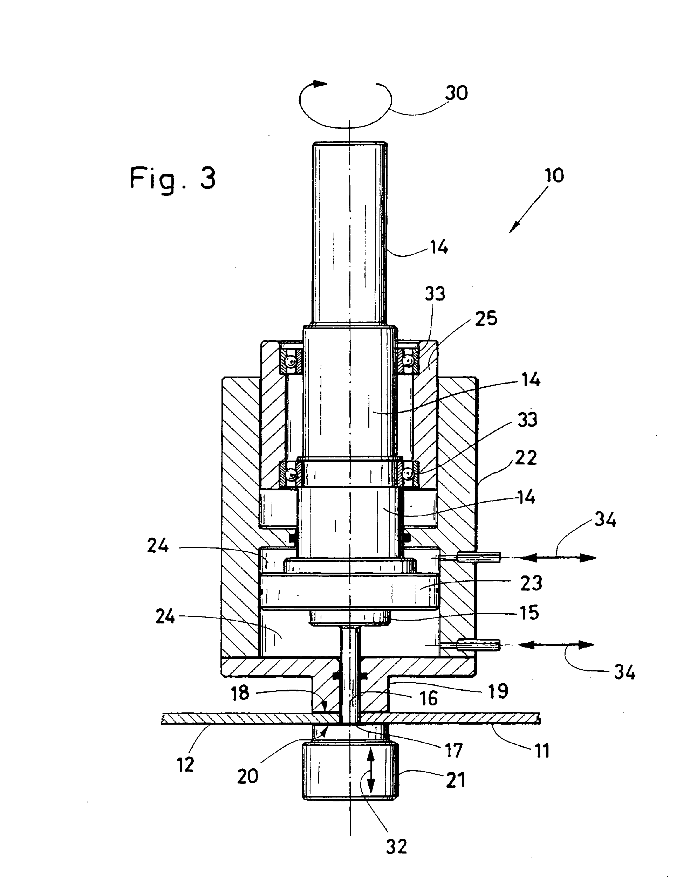

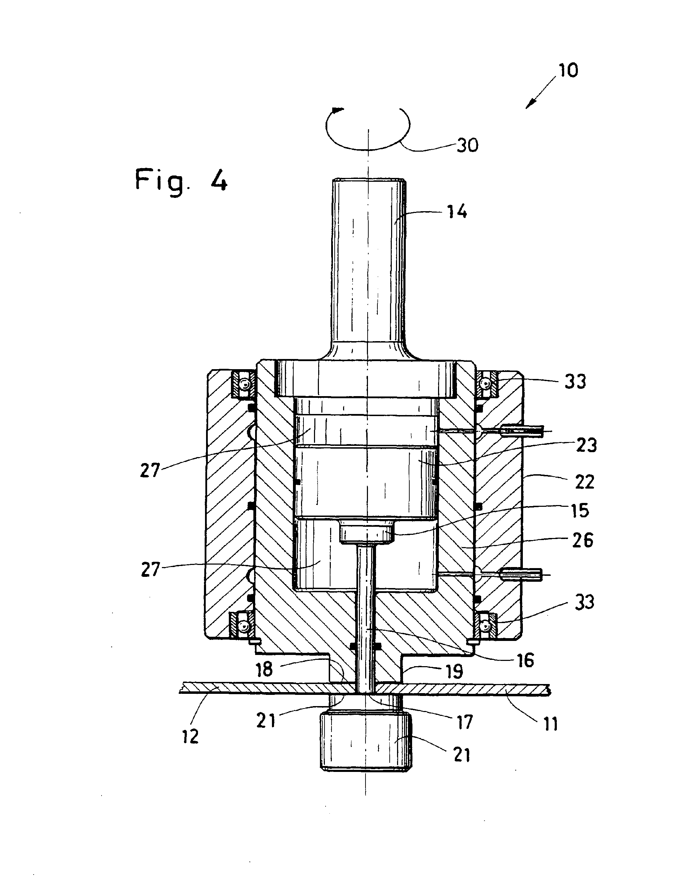

Es wird zunächst Bezug genommen auf Fig. 1, die eine Vorrichtung 10, wie sie im Stand der Technik bisher bekannt ist, zeigt, wobei anhand der Fig. 1 kurz auf die Funktionsweise der Vorrichtung 10 bei der Ausführung des Schweißvorgangs nach der Methode des Reibrührschweißens eingegangen wird. Dieses Prinzip wird auch bei der Vorrichtung 10 gemäß der Erfindung nach den Fig. 3 und 4 angewendet, so daß die jetzige Darstellung grundsätzlich gleichermaßen für die Vorrichtungen 10 gemäß den Fig. 3 und 4 gilt.

Zwei Werkstücke 11, 12, die hier flächig dargestellt sind, werden mit ihren Stoßflächen, zwischen denen die Schweißnaht 31 ausgebildet werden soll, aneinander gelegt, ggf. im auszubildenden Verbindungsbereich 13 gering voneinander beabstandet. Mittels hier nicht dargestellter Gegenlager werden beide Werkstücke 11, 12 auf ein Gegenlager gepreßt, so daß sie sich während des Schweißvorgangs relativ zueinander nicht bewegen können.

Eine Achse 14, die mittels eines Antriebs 28 in Rotation 30 versetzt werden kann, weist an ihrem antriebsabgewandten Ende 15 eine erste Schulter 18 auf, die gewissermaßen einen ersten Anschlag 19 bildet, vergleiche auch Fig. 2. Am antriebsabgewandten Ende 17 des stiftartigen Vorsprungs 16 ist ein zweiter Anschlag 21 vorgesehen, der zum stiftartigen Vorsprung 16 gerichtet eine zweite Schulter 20 ausbildet. Der axiale Abstand zwischen der ersten und der zweiten Schulter 18, 20 ist bei der bekannten Vorrichtung 10 nicht veränderbar. Durch Rotation der Achse 14 und damit des stiftartigen Vorsprungs 16, zuvor mittels des stiftartigen Vorsprungs 16 an den Verbindungsbereich 13 der beiden Werkstücke 11, 12 herangeführt und von den Schultern 18 und 20 eingeschlossen, wird der Werkstoff durch Reibung infolge der Rotation des stiftartigen Vorsprungs 16 mit dem Werkstoff der Werkstücke 11, 12 plastifiziert, so daß die plastifizierten Bereiche ineinander fließen und eine Schweißnaht 31 bilden, vergleiche die schon ausgebildete Schweißnaht 31 im linken Teil der Darstellung von Fig. 1. Die Rotationsbewegung 30 des stiftartigen Vorsprungs 16 wird mittels geeigneter Führungs- und Antriebsmittel durch eine Bewegung in Bewegungsrichtung 29 längs des Verbindungsbereichs 13 überlagert. Diese vorbeschriebene Funktionsweise gilt generell auch für die erfindungsgemäßen Vorrichtungen 10 gemäß den Darstellungen von Fig. 3 und 4, so daß auf diese Bezug genommen wird.

Die erfindungsgemäßen Vorrichtungen 10, zunächst wird auf die Ausgestaltung von Fig. 3 Bezug genommen, unterscheiden sich von der Vorrichtung 10, wie sie im Stand der Technik bekannt ist, vergleiche Fig. 1, dadurch, daß der Anschlag 21 und damit seine Schulter 20 zur Ausführung des Schweißvorgangs unter Einschluß der Werkstücke 11, 12 hin und her bewegbar ist, vergleiche Pfeil 32, wodurch die Werkstücke 11, 12 mit vorbestimmbarer Kraft zwischen beiden Schultern 18, 20 beider Anschläge 19, 21 einschließbar sind. Zur Ausbildung dieser Kraft ist ein Gehäuse 22 vorgesehen, in dem die Achse 14 geführt aufgenommen wird. In einer axial zur Achse 14 bewegbaren Führung 25 ist die Achse 14 über Lagereinrichtungen 33 drehbar gelagert. Im Bereich des antriebsabgewandten Endes 15 der Achse 14 ist ein Kolbenelement 23 vorgesehen, das in einem ebenfalls im Gehäuse 22 ausgebildeten Zylinderraum 24 axial hin und her bewegbar ist. Die Achse 14 ist genauso wie bei der bekannten Vorrichtung 10 gemäß Fig. 1 mit dem stiftartigen Vorsprung 16 verbunden. Das Kolbenelement 23 ist im Zylinderraum 24 gegenüber den Wandungen auf geeignete Weise abgedichtet, so daß keine Verbindung zwischen den beiden Teilräumen des Zylinderraums 24 und aus dem Zylinderraum 24 hinaus in den Raum des Gehäuses 22, in dem sich das Führungselement 25 befindet, besteht. Über hier nicht gesondert dargestellte Leitungsverbindungen wird Hydraulikmittel 34 in den Zylinderraum 24 hinein- bzw. herausgeführt, so daß das Gehäuse 22 und somit der damit verbundene erste Anschlag 19 eine Hin- und Herbewegung, vergleiche Pfeil 32, ausführen kann. Damit wird sichergestellt, daß, je nach Druckbeaufschlagung des Kolbenelements 23 mit Hydraulikmittel 34, ein geeigneter Anpreßdruck zwischen dem ersten und dem zweiten Anschlag 19 bzw. 21 bzw. zwischen der ersten Schulter und der zweiten Schulter 18, 20 unter Einschluß der beiden Werkstücke 11, 12 aufgebracht werden kann.

Mittels hier nicht gesondert dargestellter Haltemittel, die beispielsweise in Form eines an einem Antriebsmotor 28 oder an einen hier nicht dargestellten Industrieroboter, der mit der Vorrichtung 10 ausgerüstet ist, anliegenden Anschlags ausgebildet sein kann, wird dafür gesorgt, daß sich das Gehäuse 22 relativ zur Achse 14 nicht dreht, d.h. feststeht. Der mit dem Gehäuse 22 verbundene Anschlag 19 und somit auch dessen Schulter 18 stehen relativ zur rotierend bewegbaren Achse 14 fest.

Bei der Ausgestaltung der Vorrichtung 10 gemäß Fig. 4 werden gleiche Teile der Vorrichtung 10, die sich von der Ausgestaltung der Vorrichtung 10 gemäß Fig. 3 nicht unterscheiden, mit gleichen Bezugsziffern versehen. Auch hier steht das äußere Gehäuse 22 relativ zur Achse 14 fest. Im Unterschied zur Ausgestaltung der Vorrichtung 10 gemäß Fig. 3 ist jedoch bei der Vorrichtung 10 gemäß Fig. 4 im Gehäuse 22 ein Führungselement 26 vorgesehen, das relativ zum Gehäuse 22 nicht axial verschiebbar ist, aber im Gehäuse 22 ebenfalls über Lagereinrichtungen 33, aber zusammen mit der Achse 14, drehbar ist. Genau wie bei der Ausgestaltung der Vorrichtung 10 gemäß Fig. 3 ist auch bei der Ausgestaltung der Vorrichtung 10 gemäß Fig. 4 ein Zylinderraum 27 vorgesehen, der allerdings im Führungselement 26 ausgebildet ist. In dem Zylinderraum ist sonst auf die gleiche Weise wie in der Vorrichtung 10 gemäß Fig. 3 ein mit dem stiftartigen Vorsprung 16 verbundenes Kolbenelement 23 und über Hydraulikmittel 34 axial hin und her bewegbar ausgebildet. Zudem ist, anders als bei der Ausgestaltung der Vorrichtung 10 gemäß Fig. 3 bei der Vorrichtung 10 gemäß Fig. 4 der die erste Schulter 18 bildende Anschlag 19 mit dem Führungselement 26 verbunden. Bei der in Fig. 4 dargestellten Ausgestaltung der Vorrichtung 10 ist der Anschlag 19 zudem integral mit dem Führungselement 26 ausgebildet, was allerdings nicht zwingend der Fall sein muß. Der Zylinderraum 27 und das Kolbenelement 23 weisen einen im wesentlichen elliptischen Querschnitt auf. Damit wird sichergestellt, daß bei der Bewegung der Achse 14 in Rotationsrichtung 30 auch das Kolbenelement 23 entsprechend rotiert und somit auch der stiftartige Vorsprung 16, der mit dem zweiten Anschlag 21 verbunden ist.

Es sei noch darauf hingewiesen, daß die Verbindung des Endes 17 des stiftartigen Vorsprungs 16 mit dem zweiten Anschlag 21 lösbar ausgebildet sein kann. Genauso ist es sinnvoll, den stiftartigen Vorsprung 16 lösbar mit dem antriebsabgewandten Ende 15 der Achse 14 auszubilden, so daß der stiftartige Vorsprung 16 bei Beschädigung und/oder Abnutzung durch einen neuen auf einfache Weise ersetzt werden kann. Die Abnehmbarkeit des zweiten Anschlags 21 kann zudem auch dann sinnvoll sein, wenn für die Ausführung eines Schweißvorgangs ein stirnseitiges Heranführen des stiftartigen Vorsprungs 16 an zwei zu verbindende Werkstücke 11, 12, wie es beispielsweise in Fig. 1 grundsätzlich möglich ist, aufgrund der konstruktiven Ausgestaltung der zu verbindenden Werkstücke nicht möglich ist. Es kann dann sinnvoll sein, ein Loch entsprechend dem Durchmesser des stiftartigen Vorsprungs 16 im Verbindungsbereich 13 in die Werkstücke zu bohren bzw. vorzusehen, die Vorrichtung 10 mit dem zuvor davon gelösten zweiten Anschlag 21 mit dem stiftartigen Vorsprung 16 durch das Loch hindurchzuführen und den stiftartigen Vorsprung 16 wieder an seinem antriebsabgewandten Ende 17 mit dem zweiten Anschlag 21 zu versehen. Eine Verbindung ist beispielsweise mittels einer Gewindeverbindung, aber auch ggf. mittels einer Renkverbindung möglich.

Bei der Ausgestaltung der Vorrichtung 10 gemäß Fig. 4 rotiert somit sowohl bei der Ausführung des Schweißvorgangs der erste Anschlag 19 mit erster Schulter 18 als auch der zweite Anschlag 21 mit zweiter Schulter 20. Mittels der Ausgestaltung der Vorrichtung 10 gemäß Fig. 3 ist es möglich, einen Winkel der Vorrichtung 10 gegenüber den Werkstücken 11, 12 einzustellen, der von der senkrechten abweichen kann. Dieser Winkel ist beispielsweise durch entsprechende Ausbildung der Form der Schulter 18 einstellbar.

Anders als bei der bekannten Vorrichtung 10 gemäß Fig. 1 (Stand der Technik) kann gezielt eine Kraft zwischen beiden Anschlägen 19, 21 unter Einschluß der Werkstücke 11, 12 aufgebracht werden.

Wird die Achse 14 in Rotation versetzt, kann die Kraft durch entsprechende Steuerung des Hydraulikmittels 34 erhöht werden, bis sie die gewünschte Größe erreicht hat. Bei Beendigung des Schweißvorgangs wird durch entsprechende Steuerung des Hydraulikmittels 34 eine Bewegung des Kolbenelements 23 veranlaßt, die die beiden Anschläge 19, 21 voneinander entfernt, so daß der stiftartige Vorsprung freikommt oder, um bei dem Beispiel mit dem oben genannten Loch im Verbindungsbereich 13 der Werkstücke 11, 12 zu bleiben, aus einem Zielloch, das das Ende der Schweißnaht 31 bestimmt, nach entsprechender Entfernung des zweiten Anschlags 21 herausgezogen werden kann.

Es sei noch darauf hingewiesen, daß der den stiftartigen Vorsprung 16 bzw. die Anschläge 19, 21 bildende Werkstoff in Abhängigkeit der durch das hier beschriebene Reibrührschweißen heranzuziehenden Werkstoffe der Werkstücke 11, 12 auswählbar ist. Die Auswahl trifft der Fachmann auf diesem Gebiet selbständig, so daß ein weiteres Eingehen darauf hier nicht erforderlich ist.

### Bezugszeichenliste

- 10: Vorrichtung
- 11: Werkstück
- 12: Werkstück
- 13: Verbindungsbereich
- 14: Achse
- 15: Ende (Achse)
- 16: Stiftartiger Vorsprung
- 17: Ende (stiftartiger Vorsprung)
- 18: erste Schulter
- 49: erster Anschlag
- 20: zweite Schulter
- 21: zweiter Anschlag
- 22: Gehäuse
- 23: Kolbenelement
- 24: Zylinderraum
- 25: Führungselement
- 26: Führungselement
- 27: Zylinderraum
- 28: Antrieb (Motor)
- 29: Bewegungsrichtung
- 30: Rotationsrichtung
- 31: Schweißnaht
- 32: Pfeil
- 33: Lagereinrichtung
- 34: Hydraulikmittel

## Patentansprüche

1. Vorrichtung zum Verbinden von Werkstücken (11, 12) nach der Methode des Reibrührschweißens, wobei die Werkstücke (11, 12) dabei einen Vebindungsbereich (13) zwischen sich einschließen, mit einer rotierenden antreibbaren Achse (14), an deren antriebsabgewandten Ende ein stiftartiger Vorsprung (16) mit zwei im Abstand zueinander angeordneten Anschlägen (19, 21) ausgebildet ist, der bei seiner Rotation mit an anderen Anschlägen (19, 21) vorgesehenen Schultern (18, 20) in Kontakt mit dem Verbindungsbereich (13) der Werkstücke (11, 12) kommt und diese wenigstens im Kontaktbereich plastifiziert, wobei die Anschläge (19, 21) einen größeren Durchmesser als der Stift (16) haben, und wobei wenigstens einer der Anschläge (19, 21) zur Ausführung des Schweißvorgangs unter Einschluß der Werkstücke (11, 12) bewegbar ist und diese mit vorbestimmbarer Kraft einschließbar sind, **dadurch gekennzeichnet, daß** ein Gehäuse (22) zur geführten Aufnahme der Achse (14) vorgesehen ist, wobei die Achse (14) im Gehäuse (22) ein mit dem stiftartigen Vorspruch (16) verbundenes Kolbenelement (23) aufweist, das in einem Zylinderraum (24) im Gehäuse (22) axial hin und her bewegbar ausgebildet ist, und daß eine der beiden Schultern (18, 20) bzw. einer der beiden Anschläge (19, 21) feststeht, wohingegen eine der beiden Schultern (18, 20) bzw. einer der beiden Anschläge (19, 21) zusammen mit dem stiftartigen Vorsprung (16) angetrieben wird.

2. Vorrichtung nach Anspruch 1 **dadurch gekennzeichnet, daß** die Hin- und Herbewegung des Kolbenelements (23) hydraulisch ausführbar ist.

3. Vorrichtung nach Anspruch 1, **dadurch gekennzeichnet, daß** die vorbestimmbare Kraft bis 2,5 t groß ist.

4. Vorrichtung nach Anspruch 1, **dadurch gekennzeichnet, daß** das Gehäuse (22) relativ zür Achse (14) feststeht

5. Vorrichtung nach einem oder mehreren der Ansprüche 1 bis 4, **dadurch gekennzeichnet, daß** die Achse (14) im Gehäuse (22) in einem darin ausgebildeten Führungselement (25) axial bewegbar ist.

6. Vorrichtung nach einem oder beiden der Ansprüche 4 oder 5, **dadurch gekennzeichnet, daß** der die Schulter (18) umfassende Anschlag (19) mit dem Gehäuse (22) verbunden ist.

7. Vorrichtung nach einem der Ansprüche 1 bis 5, **dadurch gekennzeichnet, daß** ein Gehäuse (22) zur Aufnahme eines Führungselements (26) vorgesehen ist, das mit der Achse (14) drehbar verbunden ist, wobei im Führungselement (26) ein Zylinderraum (27) vorgesehen ist, in dem ein mit dem stiftartigen Vorsprung (16) verbundenes Kolbenelement (23) axial hin und her bewegbar ausgebildet ist.

8. Vorrichtung nach Anspruch 7, **dadurch gekennzeichnet, daß** der die erste Schulter (18) bildende Anschlag (19) mit dem Führungselement (26) verbunden ist.

9. Vorrichtung nach einem oder beiden der Ansprüche 7 oder 8, **dadurch gekennzeichnet, daß** der Zylinderraum (27) und das Kolbenelement (23) einen im wesentlichen elliptischen Querschnitt aufweisen.

## Claims

1. Device for joining workpieces (11, 12) by the method of friction stir welding, whereby the workpieces (11, 12) mutually encompass a joining region (13), with a shaft (14) which can be driven in rotation, the end of which remote from the drive has a pin-type projection (16) with two stops (19, 21) spaced at a distance apart from one another, which when rotated by means of shoulders (18, 20) provided on other stops (19, 21) comes into contact with the joining region of (13) of the workpieces (11, 12) and plasticizes it at least in the contact region, which stops (19, 21) have a bigger diameter than the pin (16) and at least one of the stops (19, 21) is displaceable so as to brace the workpieces (11, 12) in order to perform the welding process and the latter are braced with a pre-definable force, **characterised in that** a housing (22) is provided for accommodating the shaft (14) in a guided arrangement, and in the housing (22), connected to the pin-type projection (16), the shaft (14) has a piston element (23) which is designed to move axially in a reciprocating motion in a cylinder (24) in the housing (22), and one of the two shoulders (18, 20) respectively one of the two stops (19, 21) is stationary, whereas one of the two shoulders (18, 20) respectively one of the two stops (19, 21) is driven in conjunction with the pin-type projection (16).

2. Device as claimed in claim 1, **characterised in that** the reciprocating motion of the piston element (23) can be hydraulically operated.

3. Device as claimed in claim 1, **characterised in that** the pre-definable force is 2.5 t.

4. Device as claimed in claim 1, **characterised in that** the housing (22) is stationary relative to the shaft (14).

5. Device as claimed in one or more of claims 1 to 4, **characterised in that** the shaft (14) is axially displaceable in the housing (22) in a guide element (25) formed therein.

6. Device as claimed in one or both of claims 4 or 5, **characterised in that** the stop (19) incorporating the shoulder (18) is connected to the housing (22).

7. Device as claimed in one of claims 1 to 5,
**characterised in that** a housing (22) is provided for accommodating a guide element (26), which is connected to the shaft (14) so as to rotate, and a cylinder (27) is provided in the guide element (26) in which a piston element (23) connected to the pin-type projection (16) can be axially displaced in a reciprocating motion.

8. Device as claimed in claim 7, **characterised in that** the stop (19) forming the first shoulder (18) is connected to the guide element (26).

9. Device as claimed in one or both of claims 7 or 8, **characterised in that** the cylinder (27) and the piston element (23) have an essentially elliptical cross-section.

## Revendications

1. Dispositif de raccordement de pièces d'oeuvre (11, 12) selon le procédé de soudage par friction malaxage, les pièces d'oeuvre (11, 12) comprenant entre elles une région de raccordement (13), avec un axe entraînable en rotation (14), dont l'extrémité opposée à l'entraînement porte un appendice (16) en forme de broche comportant deux butées (19, 21) mutuellement distantes, axe qui, lors de sa rotation, avec des épaulements (18, 20) prévus au niveau des diverses butées (19, 21), entre en contact avec la région de raccordement (13) des pièces d'oeuvre (11, 12) et ramollit celles-ci au moins dans la région de contact, et où les butées (19, 21) présentent un diamètre supérieur à la broche (16), et où au moins l'une des butées (19, 21) est mobile pour exécuter l'opération de soudage, par inclusion, des pièces d'oeuvre (11, 12) et celles-ci peuvent être confinées avec une force prédéfinissable, **caractérisé en ce qu'**il est prévu un logement (22) de réception guidée de l'axe (14), et l'axe (14) comporte, dans le logement (22), un élément formant piston (23) relié à l'appendice (16) en forme de broche, élément qui est conçu de façon à être mobile axialement dans un espace cylindrique (24) dans le logement (22), et **en ce que** l'un des deux épaulements (18, 20) ou l'une des deux butées (19, 21) est fixe, tandis que l'un des deux épaulements (18, 20) ou l'une des deux butées (19, 21) est entraîné conjointement avec l'appendice (16) en forme de broche.

2. Dispositif selon la revendication 1, **caractérisé en ce que** le mouvement de va-et-vient de l'élément de piston (23) est réalisé hydrauliquement.

3. Dispositif selon la revendication 1, **caractérisé en ce que** la force prédéfinissable va jusqu'à 2,5 t.

4. Dispositif selon la revendication 1, **caractérisé en ce que** le logement (22) est fixe par rapport à l'axe (14).

5. Dispositif selon l'une ou plusieurs des revendications 1 à 4, **caractérisé en ce que** l'axe (14) est mobile axialement dans le logement (22) dans un élément de guidage (25) conçu dedans.

6. Dispositif selon l'une ou les deux revendications 4 et 5, **caractérisé en ce que** la butée (19) entourant l'épaulement (18) est reliée au logement (22).

7. Dispositif selon l'une quelconque des revendications 1 à 5, **caractérisé en ce qu'**il est prévu un logement (22), destiné à recevoir un élément de guidage (26), lequel est relié à l'axe (14) de façon à pouvoir pivoter, et où un espace cylindrique (27) est prévu dans l'élément de guidage (26), espace dans lequel un élément formant piston (23) relié à l'appendice (16) en forme de broche est conçu de façon à pouvoir aller axialement en va-et-vient.

8. Dispositif selon la revendication 7, **caractérisé en ce que** la butée (19) formant le premier épaulement (18) est reliée à l'élément de guidage (26).

9. Dispositif selon l'une ou les deux revendications 7 et 8, **caractérisé en ce que** l'espace cylindrique (27) et l'élément de piston (23) comportent une section transversale essentiellement elliptique.
